# EUROPEAN PATENT SPECIFICATION

(11) **EP 1 364 431 B1**
(45) Date of publication and mention of the grant of the patent: **26.04.2006**
(21) Application number: 02712078.1
(22) Date of filing: 14.02.2002
(51) Int. Cl.: H01R 12/18

(54) **WIDEBAND FILTER INSTALLATIONS AND CONNECTIONS**
BREITBANDFILTERINSTALLATIONEN UND VERBINDUNG
MONTAGES ET CONNEXIONS DE FILTRES A LARGE BANDE

(30) Priority: 27.02.2001 GB 0104766; 04.10.2001 ES 200102225
(43) Date of publication of application: 26.11.2003
(73) Proprietor: Tyco Electronics Raychem S.A., 28108 Alcobendas Madrid (ES)
(72) Inventor: ARIAS, Juan, Tomas, E-28100 Madrid (ES); JORDE, Jose, Manuel, E-46008 Valencia (ES)
(74) Representative: Jay, Anthony William
(86) International application number: PCT/GB2002/000649
(87) International publication number: WO 2002/069455

(56) References cited:
- WO-A-00/76178
- WO-A-02/069455
- DE-U- 20 104 605
- US-B1- 6 174 184

## Description

### BACKGROUND OF THE INVENTION

The present invention relates to wideband filter installations and connections used in the field of telecommunications.

Connecting arrangements for wideband filters installations are known from WO 00/76 178 A1.

More specifically the present invention relates to telephone networks used by different operators which provide transmission services to different users or consumers, and is meant to simplify greatly circuit connections at the level of said wideband filters, with the resulting reduction in the volume of the cabins holding said circuits and in the cubicles which contain said cabins, while also allowing to enable and perform wideband connections in any area meant for distributors in charge of the distribution and operability of telephone lines.

There are several operators in the telecommunications sector which provide voice transmission services to different users or consumers, which requires a complex telephone network in which participate a number of electrical, mechanical, etc. components which allow to provide said service.

Essentially, in said telephone network participates a switching exchange in charge of providing the various signals and lines for voice utilisation, lines which are linked by long cable deployments to the respective horizontal and vertical distributors meant to allow the distribution and operability of said telephone lines, thus enabling the users to utilise the telephone network.

When data as well, and not only voice, are to be transmitted by a same operator, such as for video signals, Internet, etc. in a wide band a digital line access multiplexer is provided which receives voice signals from the horizontal distributors and wideband signals from the corresponding servers, such as an Internet server. Said multiplexer is complemented by filters or splitters which can add both signals and distribute them once again to the vertical distributors for transmission to the user. Before this signal is received by the user further filters or splitters are provided which separate the two signals, providing the user with a voice line and a wideband line.

In compliance with recent regulations, it has been established that the network on the street known as the customer loop may be shared by other operators. That is, a second operator must establish a similar system to that used by the same operator, utilising the cable deployed on the street belonging to the first operator.

When a second operator is established such operator must perform the same functions as were previously provided by the first operator, with sufficient independence to be able to use the voice signal provided by the first operator and the wideband signal received directly from the wideband server to the second operator, and be capable of providing the user with the same service using its own general structure, distributors, filters, etc..

In practice, and more speafically, these splitters are placed in large cabins with the corresponding frames, in which are fitted printed circuit cards with the corresponding electrical components such as transformers, inducers, capacitors, resistances, connectors, etc. which can filter the incoming signals depending on the desired output.

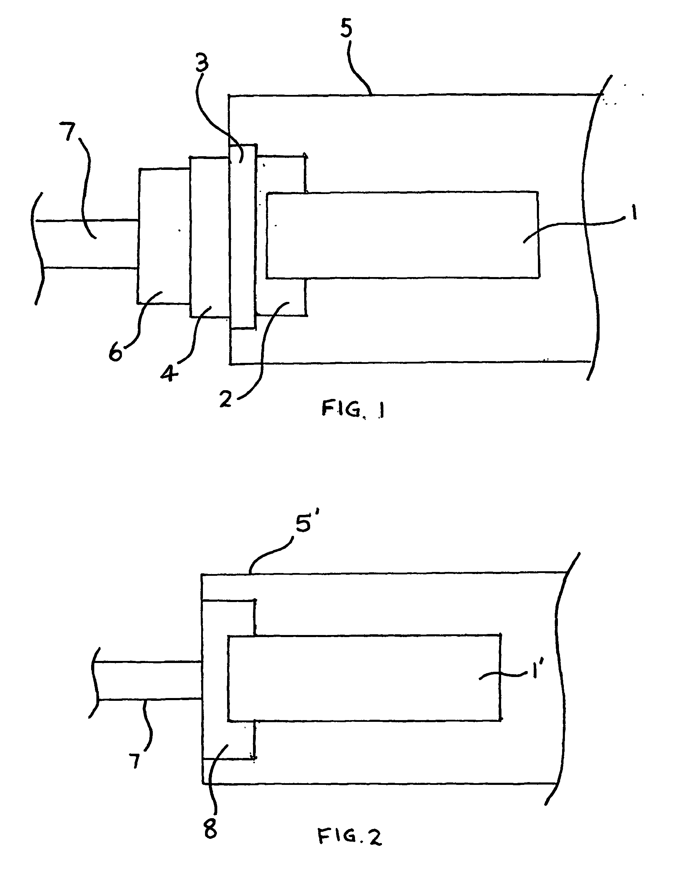

Specifically, and as shown in figure 1, in the state of the art the filter cards (1) incorporate a card edge connector (2) with normally open contacts, and are connected through a printed circuit board (3) to a first connector (4) located on the rear of the frames (5), all of these located in the splitter zone. From the rear area of the frames (5), these are linked to the corresponding distributors by a second connector (6) and a cable (7), where the conventional connection strips are provided, either open or closed.

As mentioned before, card edge connector (2) has normally open contacts, so that its operation is similar to that of open contact strips allowing connection of the data signal independent of the usual voice signal. The disadvantage of this is that in the event of a failure requiring to repair the card the user is unable to operate, albeit for a short time, as there are no available voice or data input signals until the card (1) is replaced by a new one, in order to repair the former.

In addition, the cards employed always include more than one filter, that is there are cards with"n+1"filters, so that for a single user requiring the signal at least an n+1 filter card must be fitted, thereby having n filters unused until more users enter, with the resulting financial and material cost.

In addition, when one of the aforementioned filters malfunctions, and if more than one user employs it already the entire board must be removed, leaving the other users without service until it is repaired, or secondary boards must be available, with the implied cost.

The large size of the cabins which contain the filter circuits and their connections implies that specific areas are devoted to them as large cubicles which are always removed from the distribution area, with the resulting increase in cost due to land area required, materials, wiring, etc.

### SUMMARY OF THE INVENTION

The object of the invention is to simplify installations and connections, mainly in the areas devoted to filters or splitters, with the resulting positive repercussion from the point of view of both investment and space.

For this purpose and more specifically, one of the improvements of the invention consists of eliminating the open contact card edge connector, the aforementioned printed circuit board and its corresponding connectors, by performing the connections exclusively through closed contact connection strips, which in addition to implying a great simplification of the installation implies that in the event of a malfunction it would suffice to extract the corresponding card, maintaining the voice signal connection for the user, and thereby not leaving the user without service, cutting off the data signal at this time.

Due to the simple connections additional frame fronts and mechanisations are avoided, requiring only a very simple rear frame for supporting the strips, thereby reducing the space required for it and allowing installation in the areas meant for nearby distributors, before the horizontal distributors in charge of distribution and operability of the telephone lines.

The use of said contact strip according to the invention further allows to use individual filter cards or for a single user, simplifying their extraction for repair in the event of a failure without leaving the rest of users without service.

All of this allows in addition to connect individual filter cards to the strips in the areas meant for the horizontal distributors, by fitting a simple wiring in the cards themselves.

### DESCRIPTION OF THE DRAWINGS

These and further characteristics of the present invention will become apparent in view of the accompanying drawings of a preferred embodiment, where for purposes of illustration only the following is shown:
Figure 1 shows a schematic representation of the conventional technique for connection of wideband filters.
Figure 2 shows a scheme similar to figure 1 but with the connections performed in accordance with the present invention.
Figure 3 shows a sectional enlarged view of one of the closed contacts which are used to connect the filters as disclosed by the invention.
Figure 4 shows a schematic representation of one of the individual filter cards as disclosed by the invention.

### PREFERRED EMBODIMENTS OF THE INVENTION

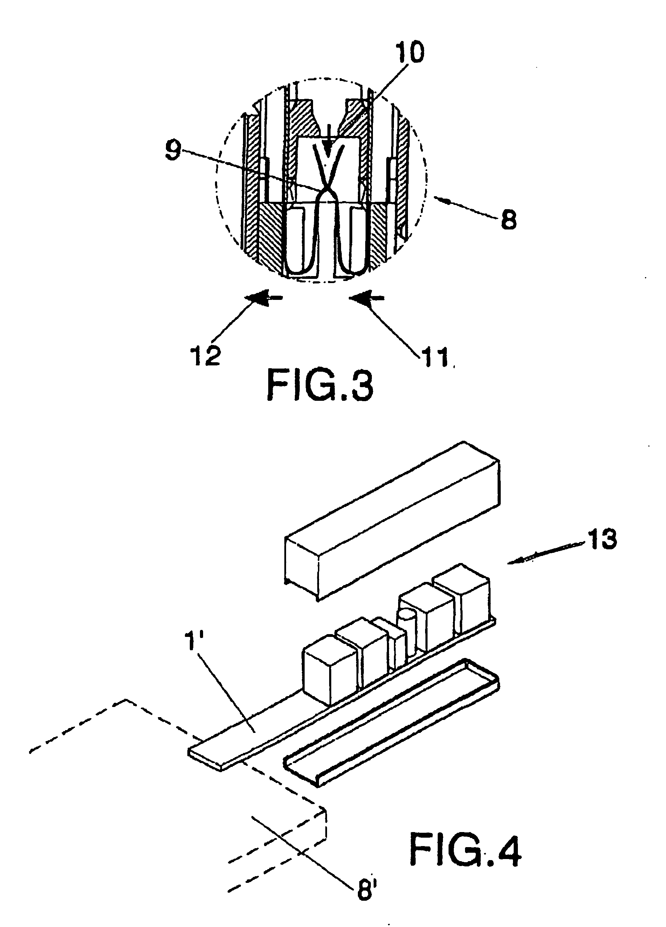

As opposed to the conventional connection of filters shown in figure 1, which has been described above, according to one of the embodiments of the invention the filter card (1') is related to the corresponding connection cable (7) by a single contact strip (8), specifically a closed contact strip as shown in figure 3.

This solution implies, as is apparent in view of figures 1 and 2, the elimination of the conventional printed circuit board (3) and of its complementary connectors (4) and (6), as well as the elimination of the card edge connector (2) and the possible replacement of the original frame (5) by a new frame (5') which can be considerably smaller. That is, by virtue of the simplicity of these connections the large frames required to hold conventional cards are eliminated, as well as the numerous connectors and a great deal of mechanisation, all very costly, and maintaining only a rear frame (5'), which by drastically reducing the space required allows in addition its installation in the areas meant for nearby distributors, before the horizontal distributors.

As shown in figure 3, the contact strip (8) tends to keep its contacts (9) permanently closed, so that when there is a malfunction in the data signal represented by the arrow (10) it is enough to extract the corresponding card, maintaining connection between the input (11) of the voice signal for the user and the corresponding output (12), that is without leaving the user without voice signal service.

As shown in figure 4, on the fiher unit (13) and on a multiple strip (8') with closed contacts are established a number of individual filter cards (1'), that is, one for each user, which allow their individual extraction for repair in the event of a malfunction or unforeseen event without leaving other users without service.

In order to allow connection of the individual filter cards (1') to the strips located in the areas meant for the horizontal distributors a simple wiring is provided on the cards (1').

It will be understood by those skilled in the art that the present invention is not limited to the embodiments shown and that many additions and modifications are possible without departing from the scope of the present invention as defined in the appending claims.

## Claims

1. Connecting arrangement for wideband filter installations and connections, in which filter cards are provided and a corresponding connection is established to the wiring, **characterised in that** the said connection is effected by a single multi-contact strip (8) which has closed contacts (9) between which it directly receives a plurality of the filter cards (1') in operation and connects them to the wiring (7) in a small frame (5') in the areas meant for nearby distributors before the horizontal distributors.

2. Connecting arrangement according to claim 1, **characterised in that** the said contact strip (8) has a data input (10), a voice input (11) and an output (12) which combines the two input signals, so that in the event of a failure in the data input (10) when the corresponding card (1') is extracted the contacts close and the connection is maintained between the voice input (11) and the output (12).

3. Assembly of a connecting arrangement according to claim 1 or 2 including the plurality of the filter cards (1') **characterised in that** the filter cards employed are cards (1') which are individual or for a single user, so that they can be extracted in the event of a malfunction without leaving other users without service.

4. Assembly of a connecting arrangement according to claim 3, **characterised in that** the filter cards (1') have a simple wiring meant to allow their connection to the contact strips located in the area of me horizontal distributors.

## Revendications

1. Agencement de connexion pour des installations et des connexions de filtres à large bande, comportant des cartes à filtre, une connexion correspondante étant établie avec le câblage, **caractérisé en ce que** ladite connexion est établie par une seule bande à plusieurs contacts (8), comportant des contacts fermés (9) entre lesquels elle reçoit directement plusieurs cartes à filtre (1') en service et les connecte au câblage (7) dans un petit cadre (5') dans des zones destinées à des distributeurs de proximité plutôt qu'à des distributeurs horizontaux.

2. Agencement de connexion selon la revendication 1, **caractérisé en ce que** ladite bande de contact (8) comporte une entrée de données (10), une entrée vocale (11) et une sortie (12) combinant les deux signaux d'entrée, de sorte qu'en cas d'une défectuosité de l'entrée des données (10), la carte correspondante (1') étant extraite, les contacts sont fermés et la connexion est maintenue entre l'entrée vocale (11) et la sortie (12).

3. Assemblage d'un agencement de connexion selon les revendications 1 ou 2, englobant les plusieurs cartes à filtre (1'), **caractérisé en ce que** les cartes à filtre utilisées sont des cartes (1') individuelles pour chaque individu ou pour un seul usager, de sorte à pouvoir être extraites lors d'une défectuosité sans priver les autres usagers des prestations de service.

4. Assemblage d'un agencement de connexion selon la revendication 3, **caractérisé en ce que** les cartes à filtre (1') comportent un simple câblage destiné à permettre leur connexion aux bandes de contact agencées dans la zone des distributeurs horizontaux.

## Patentansprüche

1. Verbindungsanordnung für Breitbandfilterinstallationen und -verbindungen, wobei Filterkarten bereitgestellt werden und eine entsprechende Verbindung mit der Verdrahtung hergestellt wird, **dadurch gekennzeichnet, daß** die Verbindung durch einen einzelnen Mehrkontaktstreifen (8) bewirkt wird, der geschlossene Kontakte (9) hat, zwischen denen er in Betrieb eine Vielzahl der Filterkarten (1') unmittelbar aufnimmt und sie in einem kleinen Rahmen (5') in den Bereichen, die für nahegelegene Verteiler vorgesehen sind, vor den horizontalen Verteilern mit der Verdrahtung (7) verbindet.

2. Verbindungsanordnung nach Anspruch 1, **dadurch gekennzeichnet, daß** der Kontaktstreifen (8) eine Dateneingabe (10), eine Spracheingabe (11) und eine Ausgabe (12) hat, welche die zwei Eingabesignale verknüpft, so daß sich im Fall eines Ausfalls bei der Dateneingabe (10), wenn die entsprechende Karte (1') herausgezogen wird, die Kontakte schließen und die Verbindung zwischen der Spracheingabe (11) und der Ausgabe (12) aufrechterhalten wird.

3. Baugruppe einer Verbindungsanordnung nach Anspruch 1 oder 2, einschließlich der Vielzahl der Filterkarten (1'), **dadurch gekennzeichnet, daß** die eingesetzten Filterkarten Karten (1') sind, die einzeln oder für einen Einzelnutzer sind, so daß sie im Fall einer Funktionsstörung herausgezogen werden können, ohne andere Nutzer ohne Service zu lassen.

4. Baugruppe einer Verbindungsanordnung nach Anspruch 3, **dadurch gekennzeichnet, daß** die Filterkarten (1') eine einfache Verdrahtung haben, die dafür vorgesehen ist, deren Verbindung mit den im Bereich der horizontalen Verteiler angeordneten Kontaktstreifen zu ermöglichen.
